# EUROPÄISCHE PATENTSCHRIFT

(11) **EP 1 836 654 B1**
(45) Veröffentlichungstag und Bekanntmachung des Hinweises auf die Patenterteilung: **11.03.2009**
(21) Anmeldenummer: 05824996.2
(22) Anmeldetag: 09.12.2005
(51) Int. Cl.: G06K 19/07, G06K 7/00

(54) **VERFAHREN ZUM ORTEN EINES RÜCKSTREUBASIERTEN TRANSPONDERS**
METHOD FOR LOCATING A BACKSCATTERABLE TRANSPONDER
PROCEDE DE LOCALISATION D'UN TRANSPONDEUR A BASE DE RETRODIFFUSION

(30) Priorität: 13.12.2004 DE 102004062365; 06.12.2005 DE 102005059507
(43) Veröffentlichungstag der Anmeldung: 26.09.2007
(73) Patentinhaber: ATMEL Germany GmbH, 74072 Heilbronn (DE)
(72) Erfinder: FISCHER, Martin, 74629 Pfedelbach (DE); FRIEDRICH, Ulrich, 74248 Ellhofen (DE); MASUCH, Jens, 74081 Heilbronn (DE); PANGELS, Michael, 71642 Ludwigsburg (DE); ZIEBERTZ, Dirk, 74246 Eberstadt (DE)
(74) Vertreter: Koch Müller Patentanwaltsgesellschaft mbH
(86) Internationale Anmeldenummer: PCT/EP2005/013186
(87) Internationale Veröffentlichungsnummer: WO 2006/063731

(56) Entgegenhaltungen:
- EP-A- 1 482 647
- US-A- 6 046 683
- US-A1- 2003 164 752

## Beschreibung

Die Erfindung betrifft ein Verfahren zum Orten eines rückstreubasierten Transponders.

Transponder werden in so genannten Radio-Frequency-Identification-(RFID)-Systemen verwendet. Hierbei werden zwischen einer oder mehreren Basisstationen bzw. Lesegeräten und einem oder mehreren Transpondern drahtlos Daten unidirektional oder bidirektional übertragen. Auf den Transpondern können auch Sensoren, beispielsweise zur Temperaturmessung, integriert sein. Derartige Transponder werden auch als Remote-Sensoren bezeichnet.

Die Transponder bzw. deren Sende- und Empfangseinrichtungen verfügen üblicherweise nicht über einen aktiven Sender für die Datenübertragung zur Basisstation. Derartige nicht aktive Systeme werden als passive Systeme bezeichnet, wenn sie keine eigene Energieversorgung aufweisen, und als semipassive Systeme bezeichnet, wenn sie eine eigene Energieversorgung aufweisen. Passive Transponder entnehmen die zu ihrer Versorgung benötigte Betriebsenergie bzw. Betriebsleistung dem von der Basisstation emittierten elektromagnetischen Feld.

Zur Datenübertragung von einem Transponder zur Basisstation mit UHF oder Mikrowellen im Fernfeld der Basisstation wird in der Regel die sogenannte Backscatter- oder Rückstreukopplung eingesetzt. Hierzu werden von der Basisstation elektromagnetische Trägerwellen bzw. ein Trägersignal emittiert, das durch die Sende- und Empfangseinrichtung des Transponders entsprechend den an die Basisstation zu übertragenden Daten mit einem Modulationsverfahren, insbesondere einem Unterträger-Modulationsverfahren, moduliert und reflektiert wird. Ein üblicherweise hierfür verwendetes Modulationsverfahren ist die Amplitudenmodulation bzw. Amplitudentastung, wie sie beispielsweise in dem Lehrbuch Klaus Finkenzeller, RFID-Handbuch, 3. Aufl., HANSER, 2002, siehe insbesondere Kapitel 6.2.1 Amplitudentastung und der US 6.046.683 beschrieben wurde. Alternativ kann auch eine Phasenmodulation verwendet werden.

Bei den üblicherweise verwendeten Datenübertragungsprotokollen wird zwischen so genannten "Reader-talks-first"(RTF)-Protokollen und "Tagtalks-first"(TTF)-Protokollen unterschieden. Bei dem TTF-Protokoll sendet die Basisstation ein unmoduliertes Trägersignal aus. Wenn ein Transponder in einen Ansprechbereich der Basisstation eintritt, d.h. dieser das von der Basisstation emittierte unmodulierte Trägersignal detektieren kann, sendet er unaufgefordert d.h. selbstständig ein Signal aus, das von der Basisstation empfangen werden kann. Das vom Transponder gesendete Signal kann beispielsweise eine Transponderidentifikation enthalten. Im Unterschied hierzu wird bei dem RTF-Protokoll eine Datenübertragung vom Transponder zur Basisstation durch Senden eines Befehls bzw. Kommandos von der Basisstation an den Transponder eingeleitet, d.h. der Transponder sendet unaufgefordert bzw. selbstständig kein Signal bzw. Informationen aus. Zum Senden des Kommandos wird dieses üblicherweise von der Basisstation kodiert und das kodierte Signal durch Modulation des Trägersignal übertragen.

Bei unidirektionalen RFID-Systemen werden Information lediglich vom Transponder zum Reader übertragen, d.h. hier wird üblicherweise nur das TTF-Protokoll verwendet. Bei bidirektionalen RFID-Systemen werden Informationen zwischen dem Transponder und dem Reader in beide Richtungen übertragen. Hier sind sowohl TTF- als auch RTF-Systeme im Einsatz.

In so genannten Pick-And-Place-Anwendungen wird ein zu platzierender Gegenstand beispielsweise aus einer Verpackung durch einen Greifer herausgenommen und anschließend an einem bestimmten Ort, beispielsweise auf einer Leiterplatte, platziert. Wenn der ursprüngliche Ort des zu platzierenden Gegenstandes unbekannt ist, dies ist beispielsweise bei Paletten der Fall, die innerhalb einer Logistik-Kette an vorher nicht exakt festgelegten Orten abgestellt werden, muss in einem ersten Schritt der Pick-And-Place-Anwendung eine räumliche Ortung der zu platzierenden Gegenstände erfolgen.

Wenn Gegenstände, beispielsweise Paletten oder einzelne Verpakkungseinheiten einer Palette, mit Transponder zur Kennzeichnung versehen werden, kann der Transponder sowohl zur Kennzeichnung der Waren als auch zu deren Ortung verwendet werden. Die Kennzeichnung erfolgt hierbei herkömmlich beispielsweise durch Eintragen einer Warenkennzeichnung in einem Speicherbereich des Transponders. Die räumliche Ortung kann anhand eines durch den Transponder gesendeten Ortungssignals erfolgen. Ein Roboter kann hierbei das Ortungssignal als Leitstrahl verwenden. Verfahren zur Ortung sind beispielsweise in der US 6.046.683 beschrieben.

Das Senden des Ortungssignals wird in der US 6.046.683 dadurch eingeleitet, dass die Basisstation den ihr aufgrund des RTF-Protokolls zunächst unbekannten Transponder anspricht bzw. aus einer Menge von Tags isoliert bzw. vereinzelt, um ihm dann direkt oder indirekt die Freigabe zum Senden des Ortungssignals zu geben. In anderen Worten muss die Basisstation kontinuierlich Abfragekommandos senden, um neu in ihren Ansprechbereich gelangende Transponder aufzufinden. Dieses so genannte Pollen verursacht ein Störspektrum.

Wenn zusätzlich zur Ortungsfunktion, d.h. bei aktivem Ortungssignal, ein Datenempfang im Transponder möglich sein soll, muss bei Transpondersystemen mit Amplitudenmodulation des zurückgestreuten Signals die Dauer des Ortungssignals zeitlich begrenzt sein oder das durch den Transponder gesendete Ortungssignal muss während bestimmter Zeitintervalle, während denen ein Nachrichtenempfang im Transponder möglich sein soll, unterbrochen bzw. unterdrückt werden.

Dies ist darin begründet, dass die Datenübertragung von der Basisstation zu einem Transponder üblicherweise mit Hilfe einer Amplitudenmodulation des durch die Basisstation gesendeten Trägersignals in Form von aufeinanderfolgenden Feldlücken bzw. Feldabschwächungen des Trägersignals erfolgt, die auch als Notche bezeichnet werden. Derartige Notche werden im Transponder mit Hilfe von so genannten Receiver-Signal-Strength-Indicator(RSSI)-Schaltungen detektiert.

Wenn das Ortungssignal des Transponders durch Amplitudenmodulation und Rückstreuen des Trägersignals durch den Transponder erzeugt wird, wird der Realteil einer Eingangsimpedanz des Transponders verändert, siehe hierzu auch Finkenzeller, Kapitel 4.2.5.4 wirksame Fläche und Rückstreuquerschnitt. Die Änderung im Realteil der Eingangsimpedanz führt zu einer Anpassung bzw. Fehlanpassung der Eingangsimpedanz des Transponders bezüglich einer Impedanz einer Transponderantenne, wodurch sich die Reflexions- bzw. Empfangseigenschaften der Transponderantenne verändern und somit mehr oder weniger Leistung durch den Transponder bzw. dessen Antenne reflektiert bzw. empfangen wird. Hierbei ist der Modulationsindex üblicherweise relativ groß, um entsprechend große Feldstärkeunterschiede zwischen einem so genannten Absorberzustand, d.h. dem angepassten Zustand, und einem Reflektor-Zustand, d.h. dem fehlangepassten Zustand, zu erzielen, d.h. um vergleichsweise große Signal-Rausch-Abstände des zurückgestreuten Signals zu bewirken.

Die von dem Transponder empfangenen Pegel nehmen bei steigender Entfernung zwischen Basisstation und Transponder stark ab, so dass sie im Gegensatz zu beispielsweise 125 kHz RFID-Systemen im Transponder verstärkt werden müssen. Dadurch sind die durch den Transponder selbst verursachten Schwankungen der Eingangsamplitude des empfangenen Trägersignals, die während der Erzeugung des Ortungssignals durch Amplitudenmodulation und Zurückstreuen des empfangenen Trägersignals entstehen, nur mit erheblichem Aufwand von den durch die Basisstation erzeugten Notch-Signalen zu unterscheiden, die ebenfalls in einer Änderung der Amplitude des empfangenen Trägersignals resultieren. Dies gilt insbesondere dann, wenn die Feldabschwächung zur Notch-Erzeugung (Modulationsindex) gering gehalten wird, um die Reichweite zu erhöhen. Zur Unterscheidung sind dann zusätzlich aufwendige Eingangsfilter im Transponder notwendig. Um eine Unterscheidung mittels Filter zu erzielen, müssen zusätzlich die Seitenbänder des empfangenen und des zurückgestreuten Signals vergleichsweise weit auseinander liegen. Dies lässt sich oftmals nicht realisieren, da sonst entsprechende Normen und/oder Regularien verletzt würden.

Zusammenfassend bedeutet dies, dass, wie oben bereits ausgeführt, aufgrund der transponderseitigen Amplitudenmodulation eine Kommunikation zwischen Transponder und Basisstation nur im Halbduplexbetrieb erfolgen kann, d.h. der Transponder während er das Ortungssignal sendet keine Modulationssignale der Basisstation empfangen kann. Folglich muss die Dauer des Ortungssignals zeitlich begrenzt sein oder das durch den Transponder gesendete Ortungssignal muss während bestimmter Zeitintervalle, während denen ein Nachrichtenempfang im Transponder möglich sein soll, unterbrochen bzw. unterdrückt werden.

Bestimmte Anwendung erfordern jedoch Transponder, die ein kontinuierliches und zeitlich nicht begrenztes Ortungssignal erzeugen und gleichzeitig von einer Basisstation ansprechbar sind, beispielsweise um ihre Identifikation abzufragen bzw. um sie zu programmieren, nachdem sie von der Basisstation aufgrund des von Ihnen gesendeten Ortungssignals als vorhanden erkannt wurden

Bei dem in der US 6.046.683 beschriebenen Ortungsverfahren wird das Senden des Ortungssignals durch die Basisstation dadurch eingeleitet, dass diese ein entsprechendes Abfragekommando an den Transponder sendet. Da das in der US 6.046.683 beschriebene Verfahren auf dem RTF-Protokoll basiert, muss die Basisstation zur Detektion, ob sich ein Transponder in ihrem Ansprechbereich befindet, kontinuierlich Abfragekommandos senden, um eine Rückmeldung eines neu in den Ansprechbereich gelangten Transponders zu bewirken. Eine derartige permanente Informationsübertragung durch die Basisstation erzeugt jedoch ein Störspektrum, das häufig unerwünscht ist. Weiterhin muss das Abfragekommando mit hoher Frequenz gesendet werden, damit ein neu in den Ansprechbereich der Basisstation gelangender Transponder mit kurzer Verzögerungszeit detektierbar ist.

Die EP 1 482 647 A2 beschreibt eine Schaltungsanordnung zur Phasenmodulation für rückstreubasierte Transponder gemäß dem Oberbegriff des Anspruchs 1.

Die US 2003/164752 A1 offenbart ein RFID-System, bei dem von einer Basisstation ein Empfangsfenster vorgegeben wird, in dem Transponder Nachrichten an die Basisstation übertragen können, um einen energiesparenden Betrieb der Transponder zu ermöglichen.

Der Erfindung liegt als technisches Problem die Bereitstellung eines einfach und kostengünstig zu implementierenden Verfahrens zur Ortung rückstreubasierter Transponder mit einem vergleichsweise geringen Störspektrum und kurzer Detektionszeit zugrunde, bei dem die Transponder ein Ortungssignal senden und ein Datenempfang durch die Transponder möglich ist, während diese ein kontinuierliches Ortungssignal senden.

Die Erfindung löst dieses Problem durch die Bereitstellung eines Verfahrens gemäß dem kennzeichenden Teil des Anspruchs 1.

Erfindungsgemäß sendet die Basisstation zunächst ein unmoduliertes Trägersignal, ohne durch Modulation des Trägersignals ein Abfragekommando an gegebenenfalls in ihrem Ansprechbereich vorhandene Transponder zu senden. Wenn ein Transponder in den Ansprechbereich der Basisstation eintritt, sendet dieser ein Ortungssignal, das durch Phasenmodulation und Rückstreuen des von der Basisstation gesendeten Trägersignals erzeugt wird. Der Transponder wird dann anhand des Ortungssignals geortet.

Da die Basisstation keine kontinuierlichen Abfragekommandos sendet, kann ein dadurch bewirktes Störspektrum vermieden werden. Da der Transponder sofort ein Ortungssignal sendet, sobald er in den Ansprechbereich bzw. die Reichweite der Basisstation gelangt, kann der Transponder praktisch verzögerungsfrei von der Basisstation detektiert werden. Das Senden eines Abfragekommandos und eine Identifizierung des Transponders durch die Basisstation wie in der US 6.046.683 ist in diesem Fall nicht zwingend erforderlich, da lediglich das Vorhandensein des Transponders im Ansprechbereich der Basisstation erkannt werden muss.

Aufgrund der Phasenmodulation bleibt die Amplitude des zurückgestreuten bzw. des am Transponder empfangenen Signals im wesentlichen konstant, so dass aufgrund der Erzeugung des Ortungssignals durch den Transponder in dessen RSSI-Schaltung keine Notche detektiert werden. Erst wenn die Basisstation zur Datenübertragung tatsächlich Notch-Signale erzeugt, werden diese auch im Transponder detektiert, obwohl dieser gleichzeitig ein Ortungssignal sendet. Auf diese Weise kann ein Transponder, beispielsweise nach Abschluss eines Ortungsvorgangs, beschrieben oder programmiert werden. Eine Schaltungsanordnung und ein Verfahren zur Erzeugung einer Phasenmodulation sind beispielsweise in der älteren deutschen Patentanmeldung 10325396.3 der Anmelderin dargestellt, deren Inhalt hiermit in vollem Umfang durch Verweis hierin aufgenommen wird.

In einer Weiterbildung des Verfahrens nach Anspruch 2 überträgt die Basisstation mindestens ein Kommando bzw. einen Befehl an den Transponder, während der Transponder das Ortungssignal sendet. Bei dem Kommando kann es sich beispielsweise um ein Schreib-, Lese-und/oder Programmierkommando handeln. Auf diese Weise können die Vorteile des TTF- und des RTF-Protokolls miteinander kombiniert werden.

In einer Weiterbildung des Verfahrens nach Anspruch 3 ist der Transponder ein passiver Transponder und sendet das Ortungssignal, wenn bzw. sobald das Trägersignal zur Versorgung des Transponders mit Betriebsenergie ausreicht. Auf diese Weise wird das Senden des Ortungssignals automatisch feldstärkeabhängig gesteuert.

In einer Weiterbildung des Verfahrens nach Anspruch 4 wird ein Auswahlverfahren durch die Basisstation durchgeführt, bei dem der zu ortende Transponder aus einer Menge von Transpondern ausgewählt wird, wenn mehr als ein Transponder ein Ortungssignal sendet. Grundsätzlich wird hierbei zwischen stochastischen und deterministischen Auswahlverfahren unterschieden. Eine ausführliche Beschreibung sowohl zu deterministischen Auswahlverfahren als auch zu stochastischen Auswahlverfahren findet sich beispielsweise in dem Lehrbuch Klaus Finkenzeller, RFID-Handbuch, 3. Aufl., HANSER, 2002, siehe insbesondere Kapitel 7.2 Vielfachzugriffsverfahren. Die Basisstation kann durch Analyse des von ihr empfangenen Signals, insbesondere im Zeitbereich, erkennen, ob mehrere Transponder gleichzeitig Ortungssignale senden, da sich deren Signale überlagern. Es ergibt sich somit im Vergleich zu einem Fall, bei dem nur ein Transponder ein Ortungssignal sendet, ein anderer Eingangssignalverlauf an der Basisstation. Der Empfang eines Auswahlkommandos in den jeweiligen Transpondern, das den Beginn des Auswahlverfahrens anzeigt, kann beispielsweise die Erzeugung der jeweiligen Ortungssignale in den Transpondern beenden. Die Basisstation kann nach einem erfolgten Auswahlvorgang ein explizites Ortungskommando an den ausgewählten Transponder senden. Nach dem Empfangen des Ortungskommandos erzeugt der entsprechende Transponder dann erneut sein Ortungssignal, wodurch der ausgewählte Transponder ortbar ist. Nach erfolgter Ortung kann dann beispielsweise ein weiteres Kommando an den ausgewählten Transponder gesendet werden, um dessen Ortungssignal wieder abzuschalten. Im Anschluss daran kann ein erneuter Auswahlvorgang unter Ausschluss des zuvor ausgewählten Transponders erfolgen, wodurch ein weiterer Transponder ortbar ist.

In einer Weiterbildung des Verfahrens nach Anspruch 5 ist das Auswahlverfahren ein, insbesondere slotbasiertes, ALOHA-Verfahren. Das ALOHA-Verfahren ist ein transpondergesteuertes, stochastisches Verfahren, bei dem die Transponder zeitversetzt ihre zu übertragenden Daten senden. Der Zeitversatz wird in der Regel auf Basis einer im Transponder erzeugten Zufallszahl eingestellt. Wenn mehrere Transponder eine Kennung innerhalb des gleichen Zeitschlitzes senden, tritt eine sogenannte Kollision auf. Dies verhindert üblicherweise, dass die Basisstation die gesendeten Daten fehlerfrei empfangen kann. Beim slotbasierten ALOHA-Verfahren ist die Kollisionswahrscheinlichkeit im Vergleich zum einfachen ALOHA-Verfahren deutlich reduziert. Es ist ein von der Basisstation gesteuertes, stochastisches Verfahren, bei dem die Transponder nur zu definierten, synchronen Zeitpunkten aktiv sind, d.h. mit der Übertragung von Daten beginnen. Hierzu gibt die Basisstation nummerierte Zeitschlitze bzw. Slots vor und die Transponder erzeugen jeweils eine Zufallszahl, wobei jeder Transponder, dessen Zufallszahl der Nummer eines Zeitschlitzes entspricht, Daten bzw. eine Kennung in diesem Zeitschlitz an die Basisstation sendet. Zur Einleitung des Auswahlverfahrens sendet die Basisstation in der Regel ein Kommando an die Transponder, durch das der Beginn einer Auswahlprozedur angezeigt wird. Nach Empfang des Kommandos werden in den Transpondern die jeweiligen Zufallszahlen gespeichert, die beispielsweise vorher im Transponder berechnet wurden. Wenn lediglich ein Transponder eine Kennung innerhalb eines Zeitschlitzes sendet, ist dieser Transponder innerhalb des Zeitschlitzes ausgewählt bzw. kann durch die Basisstation durch Senden eines Quittungskommandos ausgewählt werden.

In einer Weiterbildung des Verfahrens nach Anspruch 6 ist das Auswahlverfahren ein deterministisches Verfahren, insbesondere ein binäres Verfahren, das auch als Treewalking-Mechanismus oder Binary-Tree-Search bezeichnet wird. Möglich sind weiterhin auch gemischt stochastisch/deterministische Verfahren. Ein solches gemischtes Verfahren ist beispielsweise in der älteren deutschen Patentanmeldung 10349647.5 der Anmelderin dargestellt, deren Inhalt hiermit in vollem Umfang durch Verweis hierin aufgenommen wird.

In einer Weiterbildung des Verfahrens nach Anspruch 7 wird das Ortungssignal durch Modulation des von der Basisstation gesendeten Trägersignals mit einem Unterträger erzeugt. Die Modulation des Trägersignals mit einem Unterträger oder Subcarrier ist beispielsweise in dem Lehrbuch Klaus Finkenzeller, RFID-Handbuch, 3. Aufl., HANSER, 2002, siehe insbesondere Kapitel 3.2.1.2.2 Lastmodulation mit Hilfsträger, beschrieben. Die Modulation des Trägersignals mit einem Unterträger ermöglicht eine vereinfachte Auswertung des zurückgestreuten Signals in der Basisstation, da das im Vergleich zum Trägersignal erheblich schwächere zurückgestreute Signal im Frequenzbereich in Seitenbänder verschoben ist und somit durch entsprechende Filter in der Basisstation vom Trägersignal getrennt werden kann.

In einer Weiterbildung des Verfahrens nach Anspruch 8 enthält ein transponderinterner Speicher einen oder mehrere Parameter zur Einstellung, insbesondere der Frequenz, des Ortungssignals. Die Parameter können auch durch ein Kommando, beispielsweise in Form von Kommandoparametern, an den Transponder übertragen werden. Falls ein Auswahlverfahren notwendig wird, kann das die Parameter festlegende Kommando das Ortungskommando sein. Dies ermöglicht beispielsweise, dass die durch das oder die Ortungssignale hervorgerufenen Spektren nicht mit Spektren anderer RFID-Anwendungen kollidieren. Wenn das Ortungssignal mit Hilfe des Ortungskommandos eingestellt wird, kann die Basisstation dynamisch, in Abhängigkeit von den vorgefundenen Umgebungsbedingungen, das Spektrum des Ortungssignals einstellen. In einer vorteilhaften Ausgestaltung gemäß Anspruch 9 wird durch den oder die Parameter eine Frequenz und/oder ein Tastverhältnis eines Modulationssignals eingestellt, mit dem das Trägersignal moduliert wird. Hiermit lassen sich annähernd beliebige Spektren des Ortungssignals einstellen. Die Frequenz und/oder das Tastverhältnis lassen sich gemäß Anspruch 10 aus einem transponderinternen Oszillatortakt ableiten. Hierzu kann beispielsweise ein Zähler mit dem transponderinternen Oszillatortakt betreiben werden, wobei ein Modulationszustand umgeschaltet wird, wenn der Zählerstand den Wert eines Parameter erreicht, der zur Einstellung des Ortungssignals dient. Durch die Verwendung von zwei Parameterwerten, mit denen das PulsPausen-Verhältnis einstellbar ist, lassen sich unterschiedliche Spektren einstellen.

In einer Weiterbildung des Verfahrens nach Anspruch 11 beendet der Transponder das Senden des Ortungssignals, wenn eine vorgebbare Maximalzeit abgelaufen ist und/oder der Transponder ein Kommando empfängt, um die Erkennung weiterer Transponder in der TTF-Betriebsart zu ermöglichen. Nach einer gewissen Zeitdauer ist die Wahrscheinlichkeit hoch, dass der Transponder geortet worden ist. Folglich ist es sinnvoll, dass der Transponder das Senden des Signals einstellt, damit weitere Transponder geortet werden können. Nach einer erfolgten Ortung kann der Transponder auch mit Hilfe eines hierfür speziell vorgesehenen Kommandos "stumm" geschaltet werden, um weitere Transponder orten zu können.

In einer Weiterbildung des Verfahrens nach Anspruch 12 wird der Transponder von einer weiteren Basisstation geortet. Die weitere Basisstation kann beispielsweise in einem Roboter lokalisiert sein, der zum Greifen des Transponders bzw. der mit dem Transponder gekennzeichneten Ware dient. Die weitere Basisstation braucht lediglich eingeschränkte Funktionen aufweisen, die ausreichen, den Transponder anhand des Ortungssignals zu lokalisieren.

In einer Weiterbildung des Verfahrens nach Anspruch 13 liegt die Frequenz des Trägersignals im UHF-Frequenzbereich.

Eine vorteilhafte Ausführungsform der Erfindung ist in den Zeichnungen dargestellt und wird nachfolgend beschrieben. Hierbei zeigen schematisch:
- Fig. 1: eine transponderbasierte Pick-And-Place-Anwendung,
- Fig. 2: ein Diagramm des zeitlichen Verlaufs eines Modulationssignals zur Modulation eines von einer Basisstation gesendeten Trägersignals und
- Fig. 3: ein Diagramm des zeitlichen Verlaufs eines Ortungsvorgangs.

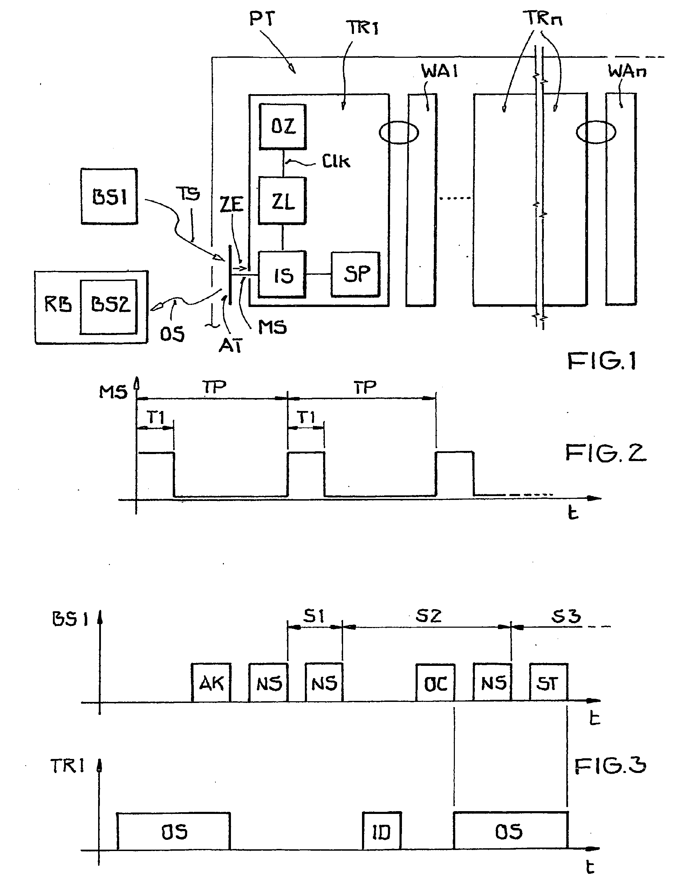

Fig. 1 zeigt eine transponderbasierte Pick-And-Place-Anwendung, die beispielsweise innerhalb eines Warenwirtschaftssystems verwendet werden kann. Die gezeigte Anwendung umfasst eine erste Basisstation BS1, einen Roboter RB, der eine zweite Basisstation BS2 umfasst, und eine Palette PT, auf der mehrere Waren WA1 bis WAn angeordnet sind, die mit einem jeweils zugehörigen passiven rückstreubasierten Transponder TR1 bis TRn markiert sind.

Die Transponder TR1 bis TRn umfassen jeweils einen Speicher SP, einen Oszillator OZ, einen Zähler ZL, eine Impedanzsteuereinrichtung IS und eine Antenne AT.

Die Basisstation BS1 emittiert ein Trägersignal TS im UHF-Bereich, das zur Versorgung der Transponder TR1 bis TRn dient und von diesen als Ortungssignal OS phasenmoduliert zurückgestreut wird, sobald sie in ein Sende/Empfangsfeld der Basisstation BS1 gelangen.

Fig. 2 zeigt ein Diagramm des zeitlichen Verlaufs eines im jeweiligen Transponder TR1 bis TRn erzeugten Modulationssignals MS zur Modulation des von der Basisstation BS gesendeten Trägersignals TS zur Erzeugung des Ortungssignals OS. Das Modulationssignal MS weist eine Periodendauer TP, eine Ein-Dauer T1 und eine Aus-Dauer TP-T1 auf. Aus den genannten Dauern TP und T1 lässt sich in einfacher Weise eine Frequenz sowie ein Tastverhältnis des Modulationssignals MS berechnen. Das Modulationssignal MS stellt einen so genannten Unterträger dar.

Zur Einstellung der Dauern T1 und TP enthält der Speicher SP Parameter in Form von Zählerwerten, die zum Vergleich mit einem Zählerstand des Zählers ZL dienen. Der Speicher kann bereits zum Herstellungszeitpunkt des Transponders TR1 initialisiert werden oder es können entsprechende Parameterwerte in einem Ortungskommando oder einem sonstigen Kommando enthalten sein, die dann im Speicher SP abgelegt werden. Wird ein 50/50 Tastverhältnis implementiert, so kann auch nur ein Zählerwert abgespeichert bzw. verwendet werden. Der Zähler ZL wird mit einem Taktsignal CLK des Oszillators OZ inkrementiert. Der Zähler ZL ist beispielsweise 8 Bit breit, so dass er nach 256 Takten
überläuft. Die mit dem Speicher SP und dem Zähler ZL gekoppelte Impedanzsteuereinrichtung IS vergleicht den Zählerstand des Zählers ZL mit den gespeicherten Zählerwerten und wechselt jeweils den Zustand des Modulationssignals MS, wenn der Zählerstand mit einem Zählerwert übereinstimmt. Ein Wechsel des Zustands des Modulationssignals MS geht einher mit einer Änderung, im wesentlichen des Imaginärteils, einer komplexen Eingangsimpedanz ZE des Transponders TR1, die eine Phasenänderung und somit eine Phasenmodulation des zurückgestreuten Signals bzw. des Ortungssignals OS bewirkt. Die Impedanzänderung erfolgt hierbei derart, dass im wesentlichen keine Belastungsänderung und somit keine Amplitudenänderung des zurückgestreuten und des vom Transponder TR1 empfangenen Signals erfolgt. Dies verhindert, dass aufgrund der Erzeugung des Ortungssignals OS durch den Transponder TR1 Notche in einer RSSI-Schaltung des Transponders TR1 erzeugt werden. Der Transponder TR1 bleibt folglich auch während des Sendens des Ortungssignals OS empfangsbereit.

Fig. 3 zeigt ein Diagramm des zeitlichen Verlaufs eines Ortungsvorgangs, bei dem der Transponder TR1 durch die zweite Basisstation BS2 geortet, durch den Roboter RB aus der Palette PT herausgegriffen bzw. vereinzelt und anschließend an einem definierten Platz abgestellt wird. Selbstverständlich kann die Ortung auch von der Basisstation BS1 durchgeführt werden.

Wenn die Palette PT, beispielsweise angeliefert durch einen Spediteur, in einen Ansprechbereich der Basisstation BS1 bzw. BS2 gelangt, ist der Basisstation BS1 bzw. BS2 in der Regel nicht bekannt, welche Waren bzw. welche Transponder TR1 bis TRn sich auf der Palette PT befinden.

Sobald einer der Transponder TR1 bis TRn in den Ansprechbereich der Basisstation BS1 gelangt, d.h. wenn das Trägersignal TS zur Versorgung des entsprechenden Transponders TR1 bis TRn mit Betriebsenergie ausreicht, erzeugt bzw. sendet er das Ortungssignal OS. Im gezeigten Ausführungsbeispiel gelangen alle Transponder TR1 bis TRn praktisch gleichzeitig in den Ansprechbereich der Basisstation BS1, wodurch diese gleichzeitig mit dem Senden ihres jeweiligen Ortungssignals OS beginnen, d.h. die jeweiligen Ortungssignale OS überlagern sich.

Die Basisstation empfängt die überlagerten Ortungssignale OS und erkennt anhand einer Analyse im Zeitbereich, dass überlagerte Signale vorliegen. Sie kann daraus schließen, dass mehrere Transponder TR1 bis TRn gleichzeitig in ihren Ansprechbereich gelangt sind. Wenn sich die jeweiligen Ortungssignale der Transponder TR1 bis TRn in ihren Eigenschaften, beispielsweise hinsichtlich ihrer jeweiligen Parameter T1 und TP, unterscheiden, kann eine Ortung eines spezifischen Transponders TR1 bis TRn anhand der spezifischen Eigenschaften des von ihm erzeugten Ortungssignals OS erfolgen. Falls sich die Ortungssignale OS nicht oder nur unwesentlich unterscheiden, wird zur Ortung eines spezifischen Transponders TR1 bis TRn zunächst ein Auswahlverfahren durchgeführt, bei dem der zu ortende Transponder, im gezeigten Beispiel ist dies der Transponder TR1, ausgewählt wird.

Zur Auswahl des Transponders TR1 führt die Basisstation BS1 ein slotbasiertes ALOHA-Auswahlverfahren durch. Zur Auswahl sind jedoch auch andere, herkömmliche Auswahlverfahren geeignet. Nach einer Einleitung des Auswahlverfahrens, beispielsweise durch Senden eines entsprechenden Kommandos durch die Basisstation BS an die Transponder TR1 bis TRn, stellen die jeweiligen Transponder TR1 bis TRn das Senden ihres Ortungssignals OS ein. Zur Ortung eines vereinzelten bzw. ausgewählten Transponders wird von der Basisstation ein Kommando an den vereinzelten Transponder geschickt, worauf dieser erneut sein Ortungssignal OS erzeugt. Dieser Vorgang wird nachfolgend detaillierter beschrieben.

Am Beginn des Auswahlverfahrens sendet die Basisstation BS1 ein Auswahlkommando AK an die Transponder TR1 bis TRn. Nach dem Empfang des Auswahlkommandos AK in den jeweiligen Transpondern TR1 bis TRn stellen diese das Senden ihres Ortungssignals OS ein. Anschließend erzeugen sie intern eine Zufallszahl, die festlegt, in welchem Slot die Transponder TR1 bis TRn ihre jeweilige Identifikation zurückstreuen.

Die Basisstation BS1 sendet nun ein Kommando NS, das den Beginn eines ersten Zeitschlitzes S1 signalisiert. Da kein Transponder TR1 bis TRn eine Zufallszahl aufweist, die dem ersten Zeitschlitz S1 zugeordnet ist, wird keine Identifikation in diesem Zeitschlitz zurückgestreut. Die Basisstation BS1 überträgt nach einer gewissen Wartezeit erneut ein Kommando NS, das den Beginn eines zweiten Zeitschlitzes S2 signalisiert. Der Transponder TR1 weist eine Zufallszahl auf, die dem zweiten Zeitschlitz S2 zugeordnet ist. Folglich streut er seine Identifikation ID an die Basisstation BS1 zurück. Die Basisstation BS1 kann anhand der Bit-Kodierung erkennen, dass im Zeitschlitz S2 keine Kollision stattgefunden hat, d.h. nur ein Transponder seine Identifikation zurückgestreut hat.

Die Basisstation BS1 sendet nun ein Ortungskommando OC an den Transponder TR1, um dessen Ortung zu ermöglichen. Nach dem Empfang des Ortungskommandos OC durch den Transponder TR1 sendet dieser das Ortungssignal OS, das durch Phasenmodulation und Rückstreuen des von der Basisstation BS1 gesendeten Trägersignals TS erzeugt wird. Der Transponder TR1 wechselt nach dem Empfangen des Ortungskommandos OC in einen so genannten persistenten Betriebszustand. Wenn kein Ortungskommando OC gesendet wird, findet kein Wechsel in den persistenten Betriebszustand statt und der ausgewählte Transponder wechselt beim Empfang eines weiteren Kommandos NS oder eines Kommandos, welches einen erneuten Auswahlvorgang einleitet, in einen Sleep- oder Stillhalte-Betriebszustand, während dem er nicht mehr an einem Auswahlvorgang teilnimmt und auch kein Ortungssignal OS erzeugt. Dagegen sendet der Transponder TR1 im persistenten Betriebszustand so lange sein Ortungssignal OS, bis eine Maximalzeit abgelaufen ist oder er ein spezifisches Kommando zum Abschalten seines Ortungssignals OS empfängt.

Der Roboter RB ortet den Transponder TR1 anhand des Ortungssignals OS mit Hilfe der Basisstation BS2, indem er eine Bewegung in Richtung zunehmender Feldstärke des Ortungssignals OS macht. Wenn der Transponder TR1 geortet ist, wird er vom Roboter RB gegriffen und an einem bestimmten, nicht gezeigten Ort platziert.

Im weiteren Verlauf des Ortungsvorgangs überträgt die Basisstation BS1 ein weiteres Kommando NS, das den Beginn eines dritten Zeitschlitzes S3 signalisiert. Da der Transponder zu diesem Zeitpunkt bereits geortet wurde, sendet die Basisstation BS1 ein Kommando ST an den Transponder TR1, worauf dieser das Senden des Ortungssignals OS beendet.

Mit der gezeigten Ausführungsform wird ein einfach und kostengünstig zu implementierendes Verfahren zur Ortung rückstreubasierter Transponder zur Verfügung gestellt, bei dem der oder die Transponder ein Ortungssignal senden und ein Datenempfang durch die Transponder möglich ist, während diese das Ortungssignal senden.

Das beschriebene Ausführungsbeispiel zeigt eine transponderbasierte Pick-And-Place-Anwendung. Es versteht sich, dass das erfindungsgemäße Ortungsverfahren für rückstreubasierte Transponder beispielsweise auch für Diebstahlsicherungsanwendungen verwendet werden kann. Hierbei kann beispielsweise anhand des vom Transponder automatisch erzeugten Ortungssignals erkannt werden, wenn eine mit dem Transponder gekennzeichnete Ware in den Ansprechbereich bzw. das elektromagnetische Feld einer Basisstation gelangt, die beispielsweise im Bereich eines Ausgangs eines Warenhauses aufgestellt sein kann. Die Basisstation kann dann getriggert durch das empfangene Ortungssignal einen Speicherbereich des Transponders auslesen, dessen Inhalt anzeigt, ob die Ware zuvor an einer Kasse bezahlt wurde. Falls die Ware nicht bezahlt wurde, kann die Basisstation die Ausgabe eines Diebstahlwarnsignals bewirken.

Ein weiterer Anwendungsfall besteht im Bereich von Lagerwirtschaftssystemen. Hierbei ist der Transponder, der eine Ware kennzeichnet, derart durch Kommandos einer Basisstation konfigurierbar, dass er in einem ersten Konfigurationsmodus kein Ortungssignal erzeugt, wenn er in die Reichweite einer Basisstation kommt. In einem zweiten Konfigurationsmodus erzeugt er dahingegen automatisch das Ortungssignal, sobald er in die Reichweite der Basisstation kommt, d.h. er führt das erfindungsgemäße Ortungsverfahren aus. Der zweite Konfigurationsmodus kann beispielsweise dann aktiviert werden, wenn der Transponder bzw. die durch ihn gekennzeichnete Ware in ein vorbestimmtes Lager zur Endverarbeitung bzw. Auslieferung an einen Endverbraucher geliefert wird. Wenn die Ware ordnungsgemäß auf einer Palette verpackt ist und zum Versenden, beispielsweise an einen Endverbraucher, konfektioniert ist, wird der Transponder kontaktlos durch eine Basisstation in den ersten Konfigurationsmodus überführt und kann folglich eine Kontrollstation, die mit einer Basisstation versehen ist, ungehindert passieren, da der Transponder im Ansprechbereich dieser Basisstation nicht automatisch das Ortungssignal erzeugt. Wenn die Ware noch nicht versandfertig ist, d.h. der Transponder sich noch im zweiten Konfigurationsmodus befindet, und die Kontrollstation passiert, erzeugt der Transponder automatisch das Ortungssignal. Aufgrund des Ortungssignals kann daher festgestellt werden, dass noch nicht versandfertige Waren aufgrund eines Fehlers in der Lagerführung unbeabsichtigt ausgeliefert werden.

Das erfindungsgemäße Ortungsverfahren kann weiterhin im Umfeld von so genannten selbstfahrenden Systemen eingesetzt werden. Hindernisse für ein automatisch gesteuertes Fahrzeug, beispielsweise Paletten, werden hierbei mit Transpondern versehen, die das erfindungsgemäße Ortungsverfahren ausführen. Das selbstfahrende Fahrzeug wird mit einer oder mehreren Basisstationen ausgerüstet: Sobald das selbstfahrende Fahrzeug in den Bereich einer durch einen oder mehrere Transponder bestückten Palette gelangt, senden der oder die Transponder ihre Ortungssignale automatisch aus. Das selbstfahrende Fahrzeug kann daher dem Hindernis selbstständig ausweichen.

Wenn die von den Transpondern erzeugten Ortungssignale beispielsweise unterschiedliche Unterträger- bzw. Subcarrierfrequenzen aufweisen, kann auf diese Weise ein einfaches Leitsystem aufgebaut werden. Hierbei bewegt sich ein Fahrzeug entlang eines ersten Leitstrahls mit einer ersten Frequenz bis zu einem ersten Transponder, der diesen Leitstrahl bzw. dieses Ortungssignal sendet. Entsprechend kann sich das Fahrzeug dann zu weiteren Transpondern selbstständig bewegen, die Signale mit einer definierten Frequenz aussenden.

## Patentansprüche

1. Verfahren zum Orten eines rückstreubasierten Transponders (TR1), mit den Schritten:
- Senden eines unmodulierten Trägersignals (TS) durch eine Basisstation (BS1),
- Senden eines Ortungssignals (OS) durch den Transponder (TR1), das durch Phasenmodulation und Rückstreuen des von der Basisstation (BS1) gesendeten Trägersignals (TS) erzeugt wird, wenn der Transponder (TR1) in einen Ansprechbereich der Basisstation eintritt,
- Orten des Transponders (TR1) anhand des Ortungssignals (OS),
**gekennzeichnet durch** die Schritten:
- Erzeugen von Notch-Signalen **durch** die Basisstation zur Datenübertragung,
- Detektieren der Notch-Signale im Transponder, wobei der Transponder gleichzeitig das Ortungssignal sendet.

2. Verfahren nach Anspruch 1, **dadurch gekennzeichnet, dass** die Basisstation (BS1) mindestens ein Kommando an den Transponder (TR1) überträgt, während der Transponder (TR1) das Ortungssignal (OS) sendet.

3. Verfahren nach Anspruch 1 oder 2, **dadurch gekennzeichnet, dass** der Transponder (TR1) ein passiver Transponder ist und der Transponder (TR1) das Ortungssignal (OS) sendet, wenn das Trägersignal (TS) zur Versorgung des Transponders (TR1) mit Betriebsenergie ausreicht.

4. Verfahren nach einem der vorhergehenden Ansprüche, **dadurch gekennzeichnet, dass** ein Auswahlverfahren durch die Basisstation (BS1) durchgeführt wird, bei dem der zu ortende Transponder (TR1) aus einer Menge von Transpondern (TR1 bis TRn) ausgewählt wird, wenn mehr als ein Transponder (TR1 bis TRn) ein Ortungssignal sendet.

5. Verfahren nach Anspruch 4, **dadurch gekennzeichnet, dass** das Auswahlverfahren ein, insbesondere slotbasiertes, ALOHA-Verfahren ist.

6. Verfahren nach Anspruch 4 oder 5, **dadurch gekennzeichnet, dass** das Auswahlverfahren ein deterministisches Verfahren, insbesondere ein binäres Verfahren, ist.

7. Verfahren nach einem der vorhergehenden Ansprüche, **dadurch gekennzeichnet, dass** das Ortungssignal (OS) durch Modulation des von der Basisstation gesendeten Trägersignals (TS) mit einem Unterträger erzeugt wird.

8. Verfahren nach einem der vorhergehenden Ansprüche, **dadurch gekennzeichnet, dass** ein transponderinterner Speicher (SP) einen oder mehrere Parameter zur Einstellung des Ortungssignals (OS) enthält.

9. Verfahren nach Anspruch 8, **dadurch gekennzeichnet, dass** durch den oder die Parameter eine Frequenz und/oder ein Tastverhältnis eines Modulationssignals (MS) eingestellt wird, mit dem das Trägersignal (TS) moduliert wird.

10. Verfahren nach Anspruch 9, **dadurch gekennzeichnet, dass** die Frequenz und/oder das Tastverhältnis aus einem transponderinternen Oszillatortakt (CLK) abgeleitet wird.

11. Verfahren nach einem der vorhergehenden Ansprüche, **dadurch gekennzeichnet, dass** der Transponder (TR1) das Senden des Ortungssignals (OS) beendet, wenn eine vorgebbare Maximalzeit abgelaufen ist und/oder der Transponder ein Kommando (ST) empfängt.

12. Verfahren nach einem der vorhergehenden Ansprüche, **dadurch gekennzeichnet, dass** der Transponder (TR1) von einer weiteren Basisstation (BS2) geortet wird.

13. Verfahren nach einem der vorhergehenden Ansprüche, **dadurch gekennzeichnet, dass** die Frequenz des Trägersignals (TS) im UHF-Frequenzbereich liegt.

## Claims

1. Method of localising a backscatter-based transponder (TR1), by the steps:
- transmitting an unmodulated carrier signal (TS) by a base station (BS1),
- transmitting a localisation signal (OS), which is produced by phase modulation and backscattering of the carrier signal (TS) transmitted by the base station (BS1), by the transponder (TR1) when the transponder (TR1) enters into a response range of the base station (BS1) and
- localising the transponder (TR1) by way of the localisation signal (OS)
**characterised by** the steps:
- generating notch signals by the base station for the data transmission and
- detecting the notch signals in the transponder, wherein the transponder simultaneously transmits the localisation signal.

2. Method according to claim 1, **characterised in that** the base station (BS1) transmits at least one command to the transponder (TR1) whilst the transponder (TR1) transmits the localisation signal (OS).

3. Method according to claim 1 or 2, **characterised in that** the transponder (TR1) is a passive transponder and a transponder (TR1) transmits the localisation signal (OS) when the carrier signal (TS) is sufficient for supply of the transponder (TR1) with operating energy.

4. Method according to any one of the preceding claims, **characterised in that** a selection method is carried out by the base station (BS1) in which the transponder (TR1) to be localised is selected from a quantity of transponders (TR1 to TRn) when more than one transponder (TR1 to TRn) transmits a localisation signal.

5. Method according to claim 4, **characterised in that** the selection method is an ALOHA method, in particular a slot-based ALOHA method.

6. Method according to claim 4 or 5, **characterised in that** the selection method is a deterministic method, particularly a binary method.

7. Method according to any one of the preceding claims, **characterised in that** the localisation signal (OS) is generated by modulation of the carrier signal (TS), which is transmitted by the base station, by a sub-carrier.

8. Method according to any one of the preceding claims, **characterised in that** a memory (SP) internal to the transponder contains one or more parameters for setting the localisation signal (OS).

9. Method according to claim 8, **characterised in that** a frequency and/or a duty factor of a modulation signal (MS) by which the carrier signal (TS) is modulated is set by the parameter or parameters.

10. Method according to claim 9, **characterised in that** the frequency and/or the duty factor is or are derived from an oscillator clock pulse (CLK) internal to the transponder.

11. Method according to any one of the preceding claims, **characterised in that** the transponder (TR1) terminates transmission of the localisation signal (OS) when a predeterminable maximum time has elapsed and/or the transponder receives a command (ST).

12. Method according to any one of the preceding claims, **characterised in that** the transponder (TR1) is localised by a further base station (BS2).

13. Method according to any one of the preceding claims, **characterised in that** the frequency of the carrier signal (TS) lies in the UHF frequency range.

## Revendications

1. Procédé de localisation d'un transpondeur basé sur la rétrodiffusion (TR1), comprenant les étapes suivantes :
· émission d'un signal porteur (TS) non-modulé par une station de base (BS1),
· émission d'un signal de localisation (OS) par le transpondeur (TR1), généré par modulation de phase et rétrodiffusion du signal porteur (TS) envoyé par la station de base (BS1), lorsque le transpondeur (TR1) entre dans une gamme de fonctionnement de la station de base (BS1),
· localisation du transpondeur (TR1) à l'aide du signal de localisation (OS),
**caractérisé par** les étapes suivantes :
· génération de signaux impulsionnels par la station de base pour la transmission de données,
· détection des signaux impulsionnels dans le transpondeur, le transpondeur émettant en même temps le signal de localisation.

2. Procédé selon la revendication 1, **caractérisé en ce que** la station de base (BS1) transmet au moins un ordre au transpondeur (TR1) pendant que le transpondeur (TR1) envoie le signal de localisation (OS).

3. Procédé selon la revendication 1 ou 2, **caractérisé en ce que** le transpondeur (TR1) est un transpondeur passif et **en ce que** le transpondeur (TR1) envoie le signal de localisation (OS) lorsque le signal porteur (TS) est suffisant pour alimenter le transpondeur (TR1) en énergie de fonctionnement.

4. Procédé selon l'une quelconque des revendications précédentes, **caractérisé en ce qu'**un processus de sélection est effectué par la station de base (BS1), au cours duquel le transpondeur à localiser (TR1) est sélectionné parmi une quantité de transpondeurs (TR1 à TRn), lorsque plus d'un transpondeur (TR1 à TRn) émettent un signal de localisation.

5. Procédé selon la revendication 4, **caractérisé en ce que** le processus de sélection est un procédé ALOHA, plus particulièrement à créneaux.

6. Procédé selon la revendication 4 ou 5, **caractérisé en ce que** le procédé de sélection est un procédé déterministe, plus particulièrement un procédé binaire.

7. Procédé selon l'une quelconque des revendications précédentes, **caractérisé en ce que** le signal de localisation (OS) est généré par modulation par une sous-porteuse du signal porteur (TS) émis par la station de base.

8. Procédé selon l'une quelconque des revendications précédentes, **caractérisé en ce qu'**une mémoire interne au transpondeur (SP) contient un ou plusieurs paramètres pour le réglage du signal de localisation (OS).

9. Procédé selon la revendication 8, **caractérisé en ce que** par le ou les paramètres on règle une fréquence et/ou un taux d'impulsions d'un signal de modulation (MS), par lequel le signal porteur (TS) est modulé.

10. Procédé selon la revendication 9, **caractérisé en ce que** la fréquence et/ou le taux d'impulsions proviennent d'un oscillateur à fonction d'horloge (CLK) interne au transpondeur.

11. Procédé selon l'une quelconque des revendications précédentes, **caractérisé en ce que** le transpondeur (TR1) arrête l'émission du signal de localisation (OS) lorsqu'une durée maximale prédéterminable s'est écoulée et/ou lorsque le transpondeur reçoit un ordre (ST).

12. Procédé selon l'une quelconque des revendications précédentes, **caractérisé en ce que** le transpondeur (TR1) est localisé par une station de base supplémentaire (BS2).

13. Procédé selon l'une quelconque des revendications précédentes, **caractérisé en ce que** la fréquence du signal porteur (TS) est située dans la gamme des ultra-hautes fréquences.
